# EUROPEAN PATENT SPECIFICATION

(11) **EP 0 561 350 B1**
(45) Date of publication and mention of the grant of the patent: **27.05.1998**
(21) Application number: 93104274.1
(22) Date of filing: 16.03.1993
(51) Int. Cl.: G11B 17/04, G11B 33/08

(54) **Disk loading apparatus**
Plattenladegerät
Appareil de chargement de disque

(30) Priority: 19.03.1992 JP 93825/92
(43) Date of publication of application: 22.09.1993
(60) Divisional application: 95104582.2
(73) Proprietor: SONY CORPORATION, Tokyo (JP)
(72) Inventor: Akira, Tanaka, c/o Sony Corporation, Tokyo (JP)
(74) Representative: Körber, Wolfhart, Dr.rer.nat.

(56) References cited:
- GB-A- 2 227 594
- US-A- 4 561 085

## Description

### BACKGROUND OF THE INVENTION

### 1. Field of the Invention

This invention relates to a disk loading apparatus suitable for use with, for example, a compact disk player.

### 2. Description of the Related Art

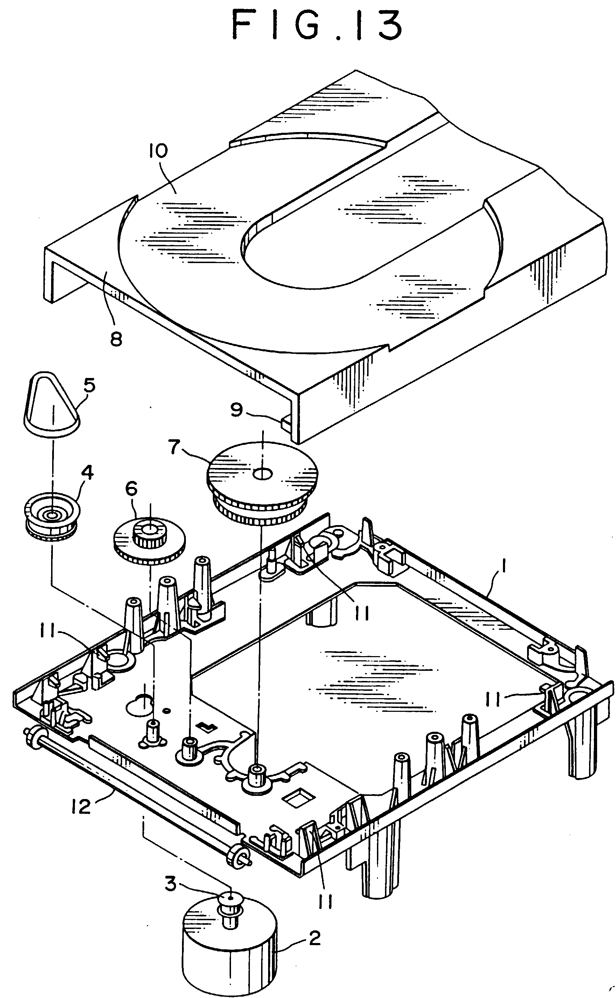

Various disk loading apparatus are conventionally known and incorporated in various apparatus such as a compact disk player. An exemplary one of such conventional disk loading apparatus is shown in Fig. 13. Referring to Fig. 13, the disk loading mechanism shown includes a loading motor 2 mounted on a main chassis 1. A motor pulley 3 is securely mounted on a rotary shaft of the loading motor 2. A belt 5 extends around the motor pulley 3 so that rotation of the motor pulley 3 is transmitted to a loading pulley 4 mounted for rotation on the main chassis 1. An intermediate gear 6 and a drive gear 7 are mounted on the main chassis 1, and rotation of the loading pulley 4 is transmitted to the drive gear 7 via the intermediate gear 6.

A tray 8 having a disk receiving portion 10 for receiving a disk thereon is supported for movement on the main chassis 1 under the guidance of a plurality of guide elements 11. A rack 9 is formed on one of a pair of inner side faces of the tray 8 for engaging the drive gear 7.

When the loading motor 2 is energized to rotate, the rotation thereof is transmitted to the rack 9 via the motor pulley 3, the loading pulley 4, the belt 5, the intermediate gear 6 and the drive gear 7. As a result, the tray 8 is moved relative to the main chassis 1. Consequently, a disk placed on the receiving portion 10 of the tray 8 is loaded to or unloaded from a predetermined position.

In the conventional compact disk player, the axes of rotation of the rotational elements of the drive system from the loading motor 2 to the drive gear 7 thus extend in a direction perpendicular to the direction of advancing and retracting movement of the tray 8. Accordingly, the conventional compact disk player has a subject that a comparatively great dimension is required in a direction perpendicular to the direction of advancing and retracting movement of the tray, that is, in the vertical direction of the compact disk player and it is difficult to reduce the dimension and hence the overall thickness of the compact disk player.

US 4,561,085 describes a front-loading disc player comprising a housing and an electrically driven disc transport mechanism operable to transport a disc on a tray from a position external to the housing to a position within the housing above a playing mechanism and to mount the disc on the playing mechanism. The disc transport mechanism is based upon a tray which is slidably mounted in the housing, a container which supports the disc until it is mounted on the playing mechanism and a cam mechanism slidably mounted on the tray and supporting the container, and which is driven by an electric motor through a rack gear to produce all of the requisite movements of the tray and container.

### SUMMARY OF THE INVENTION

It is an object of the present invention to provide a disk loading apparatus which allows reduction of the overall thickness of the disk loading apparatus and of an apparatus in which the disk loading apparatus is incorporated.

In order to attain the object described above, according to the present invention, there is provided a disk loading apparatus as defined in claim 1.

The disk loading apparatus may further comprise guide means for supporting the tray for sliding movement with respect to the main body.

The transmitting means includes a first pulley mounted on the rotary shaft of the motor, a second pulley disposed in the main body and including a rotary shaft having an axis extending perpendicularly to the direction of the axis of the rotary shaft of the motor, the second pulley being held in contact with the first pulley so that rotation of the first pulley is transmitted to the second pulley, and gear means for transmitting rotation of the second pulley to the tray. Preferably, at least one of the first and second pulleys is an elastic member. At least a contacting portion of at least one of the first and second pulleys at which the one pulley contacts with the other pulley may be formed from the elastic member. The disk loading apparatus further comprises bias means for biasing the second pulley into contact with the first pulley.

In the disk loading apparatus, rotation of the motor is transmitted in a perpendicular direction by means of the transmitting means and particularly by way of the first and second pulleys which are disposed perpendicularly to each other. Consequently, the disk loading apparatus can be constructed with a comparatively small thickness. Further, since rotation is transmitted by sliding movement between the first and second pulleys, possible damage to the drive system which may occur when, for example, an impact is applied from the outside to the disk loading apparatus is reduced, and also occurrence of noise is suppressed.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

Fig. 1 is a perspective view of a disk loading apparatus showing a preferred embodiment of the present invention:
Fig. 2 is an exploded perspective view of the disk loading apparatus shown in Fig. 1:
Fig. 3 is a plan view of the disk loading apparatus of Fig. 1 when a tray is at its retracted position:
Fig. 4 is a front elevational view of the disk loading apparatus shown in Fig. 1:
Fig. 5 is a plan view of the disk loading apparatus of Fig. 1 when the tray is at its advanced position:
Fig. 6 is an enlarge sectional view showing detailed construction of a motor pulley and a loading pulley of the disk loading apparatus of Fig. 1:
Fig. 7 is a schematic view showing a cam formed on a side face of a drive gear of the disk loading apparatus of Fig. 1:
Fig. 8 is an enlarged sectional view showing detailed construction of an insulator of the disk loading apparatus of Fig. 1:
Fig. 9 is a side elevational sectional view of the disk loading apparatus when the tray is at its outwardly drawn out position;
Fig. 10 is a side elevational sectional view of the disk loading apparatus when the tray is at its inwardly accommodated position:
Fig. 11 is a reduced schematic view of the disk loading apparatus when the tray is at its fully outwardly drawn out position;
Fig. 12 is a schematic view of the tray at a position at which a disk is arrested by an arresting element: and
Fig. 13 is an exploded perspective view showing an exemplary one of conventional compact disk players.

### DETAILED DESCRIPTION OF THE PREFERRED EMBODIMENT

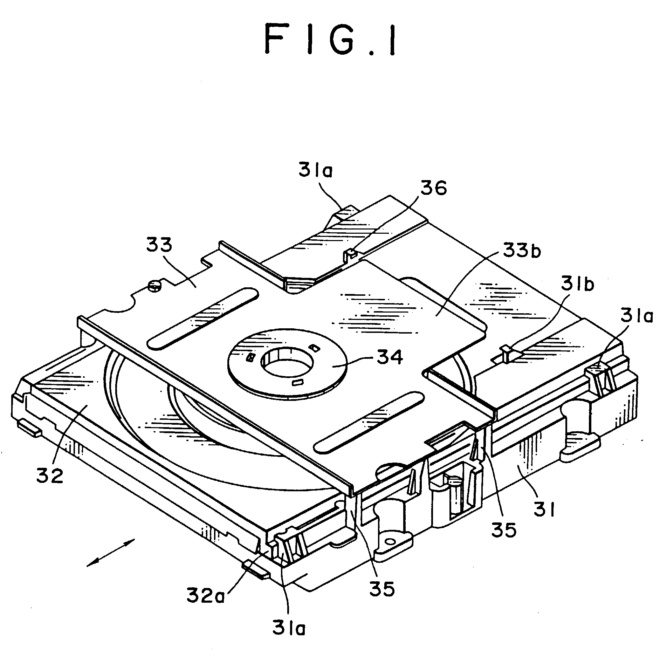

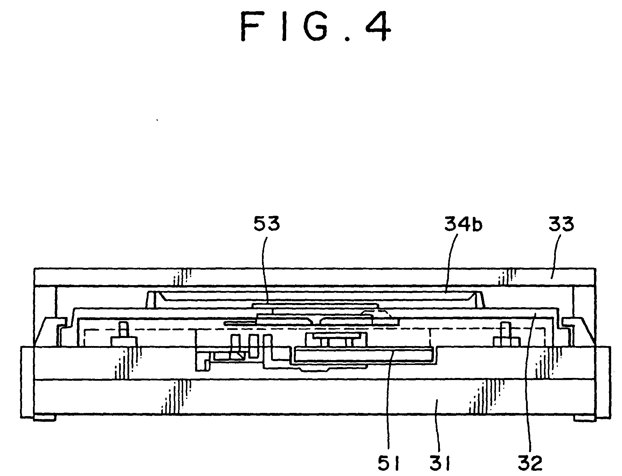

Referring first to Figs. 1 to 5, there is shown a disk loading apparatus to which the present invention is applied. The disk loading apparatus shown includes a main chassis 31 having two pairs of guide elements 31a formed at side portions thereof, and a tray 32 having a pair of rails 32a in the form of ribs formed thereon and held in engagement with the guide elements 31a. Consequently, the tray 32 is mounted for movement in directions indicated by double-sided arrow marks in Figs. 1, 3 and 5 on the main chassis 31.

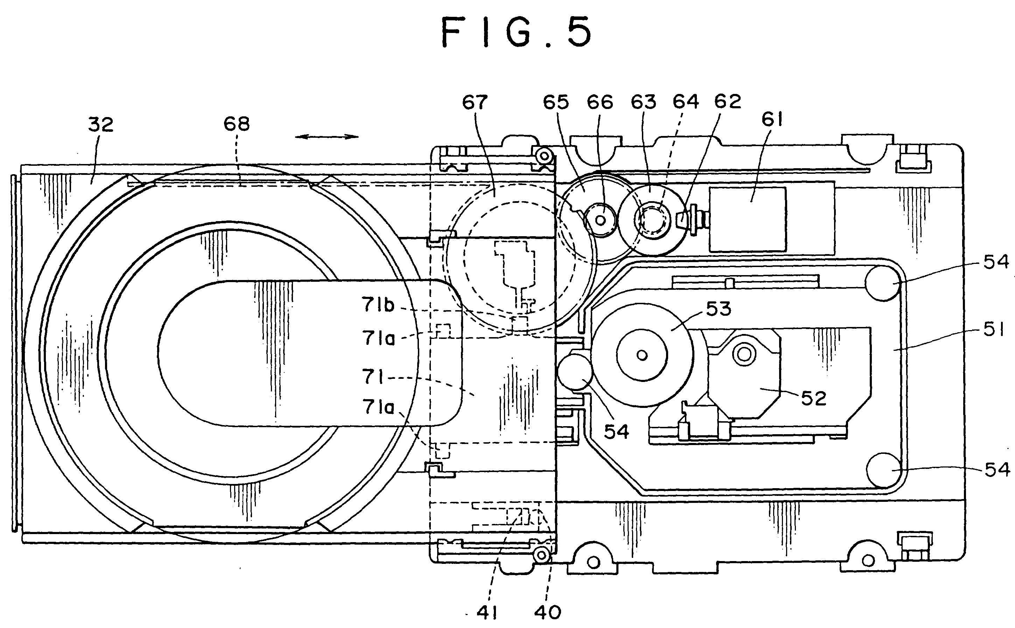

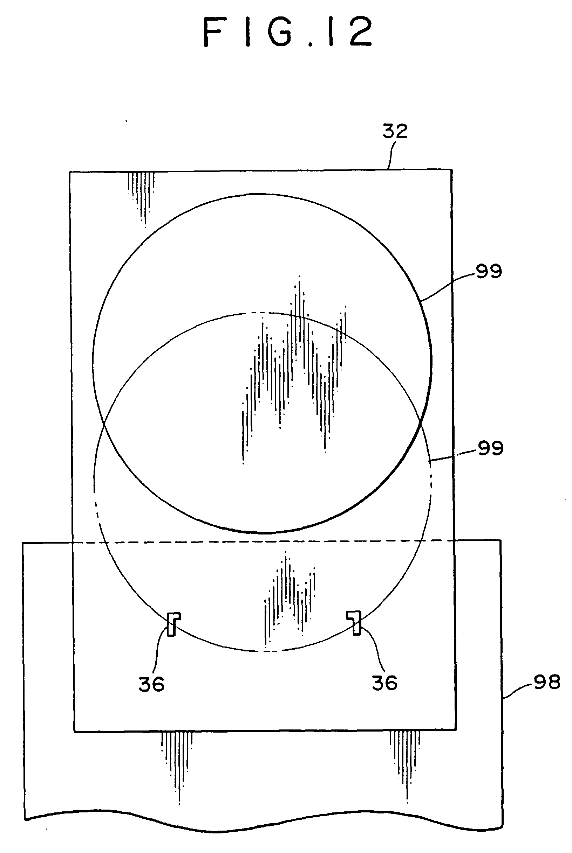

A plurality of pairs of projections 35 are formed on the main chassis 31, and a chucking chassis 33 is secured to the projections 35 individually by means of screws. A hole 33a is formed in the chucking chassis 33, and a chucking pulley member 34 including a chucking pulley 34a of a small diameter and another chucking pulley 34b of a large diameter is held for rotation in the hole 33a. The chucking pulley 34b cooperates with a turntable 53 (Fig. 5) to chuck therebetween a disk 99 (Fig. 12) received on the turntable 53.

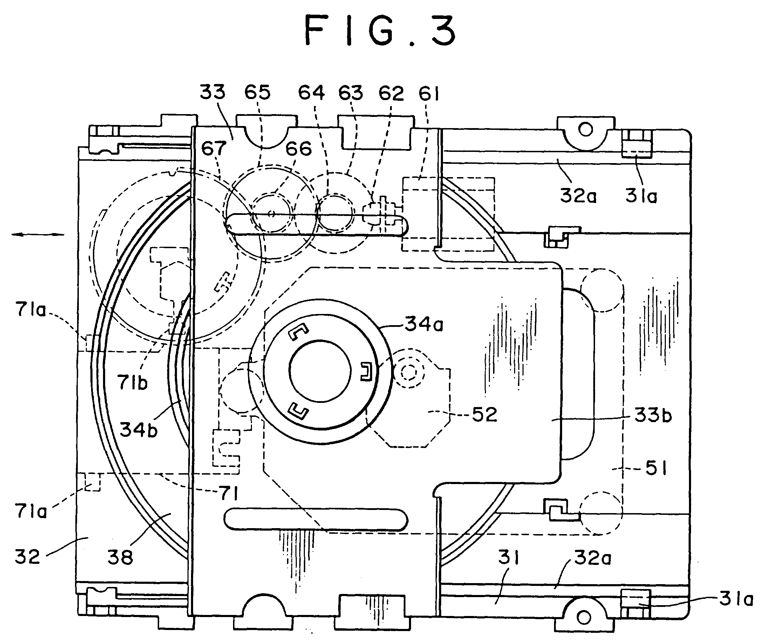

An annular recessed 38 for receiving a disk 99 thereon is formed on the tray 32, and a hole 37, in which the turntable 53 and a pickup 52 are disposed, is formed in the recessed portion 38. Further, a pair of arresting portions 36 in the form of bent lugs are formed at left and right locations rearwardly of the tray 32. When the tray 32 is retracted to its most interior position (rightmost position in Figs. 3 and 5) with respect to the main chassis 31, a projected portion 33b of the chucking chassis 33 is positioned in the proximity of the arresting portions 36. Further, a rack 68 is formed on a side portion (upper portion in Fig. 5) of the tray 32, and a pin 40 is implanted at a rear portion on the opposite side portion of the tray 32. The pin 40 is engaged with a projection 41 formed on the main chassis 31 when the tray 32 is advanced to a predetermined position which is a position in Fig. 5, that is, a most advanced position from a main body 98 of the disk loading apparatus shown in Fig. 12.

As particularly shown in Figs. 3 and 5, a loading motor 61 having a generally elliptical profile is mounted on the main chassis 31 such that a rotary shaft thereof extends in parallel to the advancing and retracting direction of the tray 32, that is, parallel to the plane of each of Figs. 3 and 5. A motor pulley 62 made of a synthetic resin is coupled to an end of the rotary shaft of the loading motor 61. A tapered face 62a is formed on the motor pulley 62. A loading pulley 63, which is made of, for example, silicon rubber, is supported for rotation on the main chassis 31 such that a rotary shaft thereof extends perpendicularly to the rotary shaft of the loading motor 61. Also the loading pulley 63 has a tapered face 63a, which contacts with the tapered face 62a of the motor pulley 62 so that rotation of the motor pulley 62 is transmitted to the loading pulley 63.

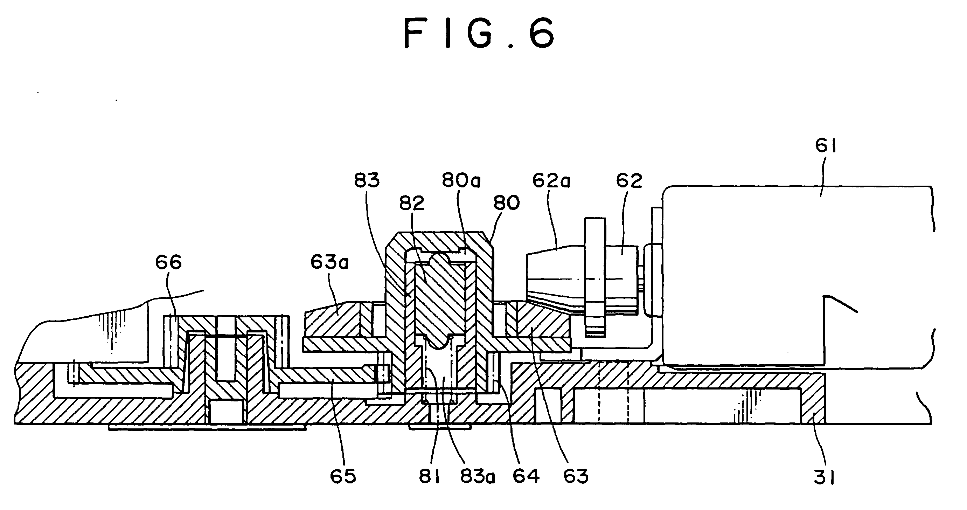

Referring also to Fig. 6, the loading pulley 63 has a rotary shaft 80 at the center thereof and has a cavity 80a formed in the inside thereof. A pin 83 is formed on the main chassis 31 and fitted in the cavity 80a. A cavity 83a is formed in the pin 83, and a spring 81 and a pin 82 are inserted in the cavity 83a. The spring 81 normally urges the pin 82 upwardly in Fig. 6 so that an upper end portion of the pin 82 in Fig. 6 urges an inner wall of the rotary shaft 80 upwardly, and as a result the tapered face 63a of the loading pulley 63 is held in contact under pressure with the tapered face 62a of the motor pulley 62. Consequently, rotation of the motor pulley 62 is transmitted with certainty to the loading pulley 63.

A gear 64 is formed coaxially on the rotary shaft 80 of the loading motor 63 below the loading pulley 63. The gear 64 is held in meshing engagement with another gear 65, and a further gear 66 of a small diameter is coupled coaxially to the gear 65. The gear 66 is held in meshing engagement with a drive gear 67, which is held in meshing engagement with the rack 68 on the tray 32.

Referring to Figs. 3, 5 and 7, the drive gear 67 includes an upper gear 67a and a lower gear 67b and has a cam 67c in the form of a cam groove formed between the gears 67a and 67b. A pin 71b is formed on a pivotal plate 71 (Fig. 3) and is fitted in the cam 67c. Consequently, as the drive gear 67 rotates, the pin 71b is guided by the cam 67c so that the pivotal plate 61 is pivoted in a direction perpendicular to the plane of Fig. 3 around a common axis of a pair of projections 71a at which the pivotal plate 71 is supported for rotation on the main chassis 31.

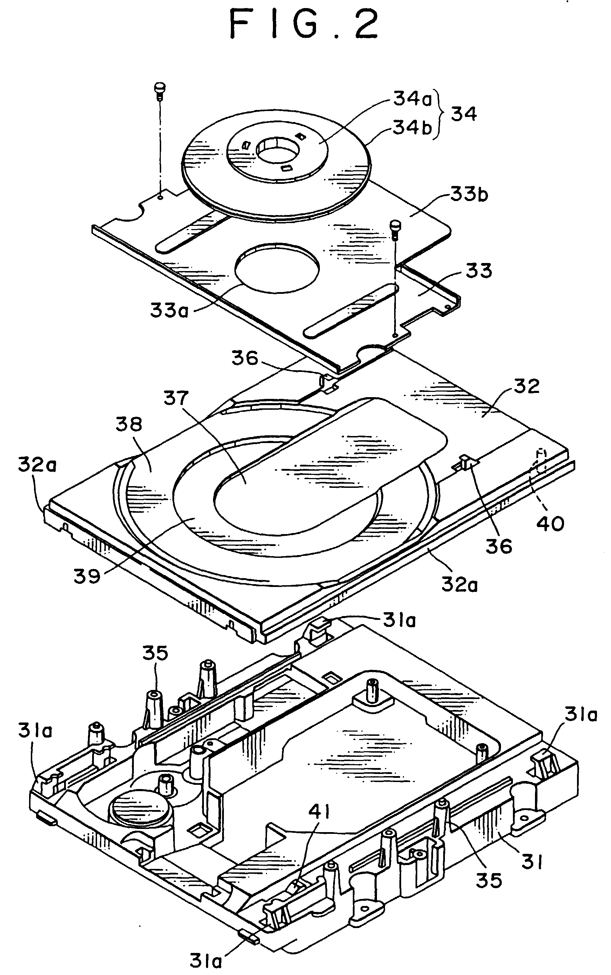

Referring to Figs. 3 and 5, a turntable chassis 51 is disposed in the hole 37 shown in Fig. 2. The turntable chassis 51 is supported on the main chassis 31 by means of three insulators 54. The turntable 53 and the pickup 52 are disposed on the turntable chassis 51. The turntable 53 rotates a disk 99 (Fig. 12) when the disk 99 is received thereon. When the disk 99 is received on the turntable 53 the chucking pulley 34b shown in Fig. 2 presses the disk 99 against the turntable 53. The pickup 52 is mounted for movement in the leftward and rightward directions of Fig. 5 on the turntable chassis 51.

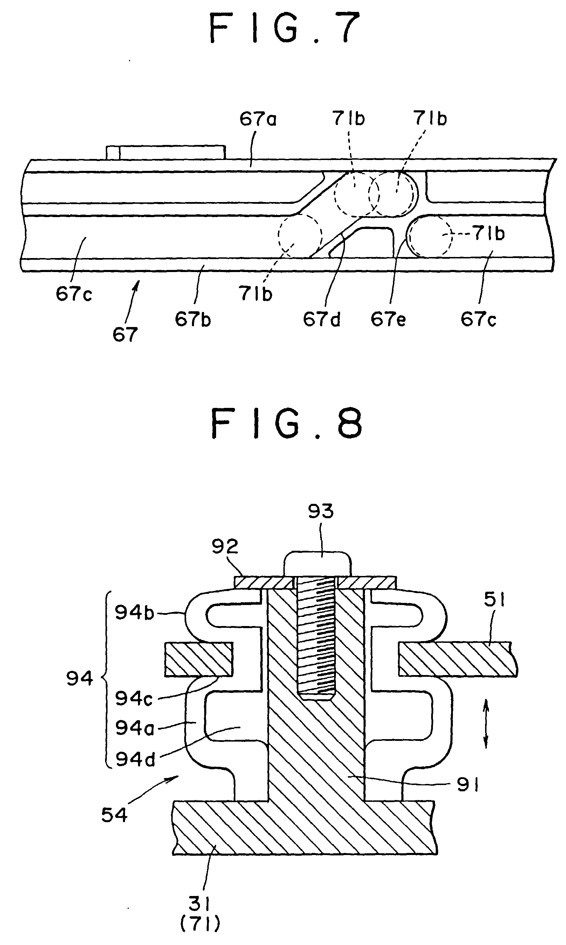

Referring now to Fig. 8. an insulator 54 is shown in detail. The insulator 54 shown includes a member 94 formed from rubber. The member 94 has a pair of swollen portions 94a and 94b swollen outwardly and has, between the swollen portions 94a and 94b, an inwardly recessed concave portion 94c, in which the turntable chassis 51 is received. A hollow 94d is formed in the inside of the member 94, and a pin 91 formed either on the main chassis 31 or on the pivotal plate 71 is inserted in the hollow 94d of the member 94. A screw 93 is screwed in the pin 91 with a washer 92 interposed therebetween. Otherwise possible letting off of the member 94 from the pin 91 is prevented by the washer 92.

Consequently, even if the main chassis 31 is vibrated by external vibrations, the vibrations thereof are attenuated by the member 94 so that the vibrations may not be transmitted very much to the turntable chassis 51. Further, the distance between the concave portion 94c and the pin 91 is set comparatively large so that not only the turntable chassis 51 is movable by a small distance in the upward and downward directions in Fig. 8, but also the turntable chassis 51 can be inclined or pivoted within a predetermined angular range relative to the main chassis 31.

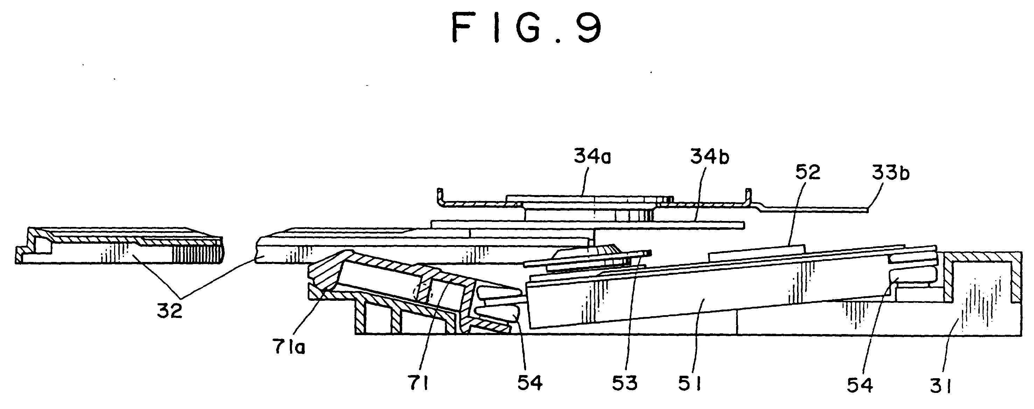

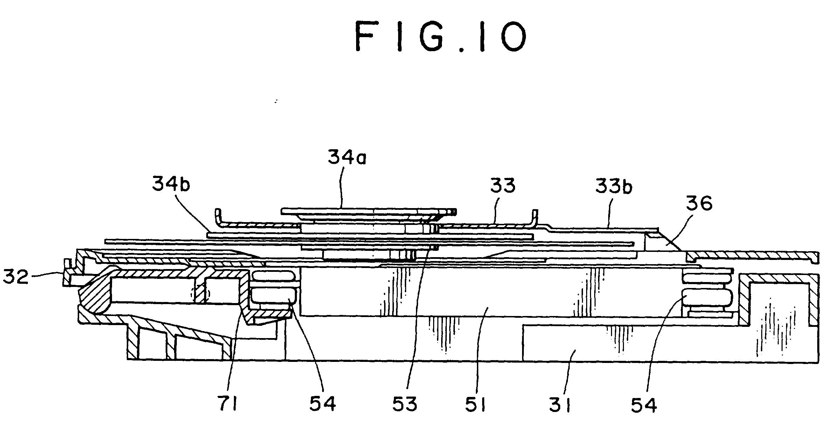

Such pivotal motion between the pivotal plate 71 and the turntable chassis 51 around the insulator 54 can be seen from Figs. 9 and 10. Fig. 9 particularly shows the disk loading apparatus in a condition wherein the tray 32 is advanced outwardly from the main chassis 31. In the position shown in Fig. 9, the pivotal plate 71 is at its position pivoted in the clockwise direction in Fig. 9 around the common axis of the projections 71a. Meanwhile, the turntable chassis 51 is at its position pivoted in the counterclockwise direction around the other two insulators 54 only one of which is shown at a right portion in Fig. 9. While the turntable chassis 51 and the pivotal plate 71 are coupled to each other by way of the insulator 54 shown on the left side in Fig. 9, since the insulator 54 supports the turntable chassis 51 for pivotal motion thereon as described hereinabove, such pivotal motion of the turntable chassis 51 is allowed by the insulator 54.

When the turntable 53 is at its downwardly moved position shown in Fig. 9, even if the tray 32 is moved rightwardly in Fig. 9, the turntable 53 will not interfere with the tray 32 at all.

On the other hand, when the tray 32 is retracted to a predetermined position, the turntable chassis 51 and the pivotal plate 71 are returned to their horizontal positions as shown in Fig. 10. Consequently, the turntable 53 projects upwardly and is inserted into the center hole of a disk transported thereto by the tray 32. As a result, the disk is chucked between the chucking pulley 34 and the turntable 53.

Subsequently, operation of the disk loading apparatus will be described. Now, if an instruction of advancement of the tray 32 is issued when the tray 32 is accommodated at the rightmost position with respect to the main chassis 31 as shown in Fig. 3, the loading motor 61 is energized to rotate. The rotation of the loading motor 61 is transmitted to the drive gear 67 by way of the motor pulley 62, the loading pulley 63, the gear 64, the gear 65 and the gear 66. In this instance, when the rotation is transmitted from the motor pulley 62 to the loading pulley 63, the direction of the axis of rotation is turned by 90 degrees as seen from Fig. 6. Consequently, the drive gear 67 is rotated in the counterclockwise direction in Fig. 3. Since the drive gear 67 is held in meshing engagement with the rack 68 of the tray 32 as shown in Fig. 5, the rack 68 is moved in the leftward direction in Fig. 3 until it projects from the main chassis 31 as shown in Fig. 5.

When the tray 32 is in its accommodated position shown in Fig. 3. the pin 71b of the pivotal plate 71 remains fitted at an upper portion of the cam 67c shown in Fig. 7. Then, when the drive gear 67 rotates, the pin 71b moves in the downward direction in Fig. 7 following an inclined face 67d of the cam 67c. As a result, the pivotal plate 71 is pivoted in the clockwise direction as shown in Fig. 9 around the common axis of the projections 71a. Since the turntable chassis 51 is coupled to the pivotal plate 71 by way of the insulator 54, the turntable chassis 51 is pivoted simultaneously in the counterclockwise direction in Fig. 9. Since the turntable chassis 51 is pivoted downwardly in this manner, the tray 32 can be moved to the unloading position without a trouble.

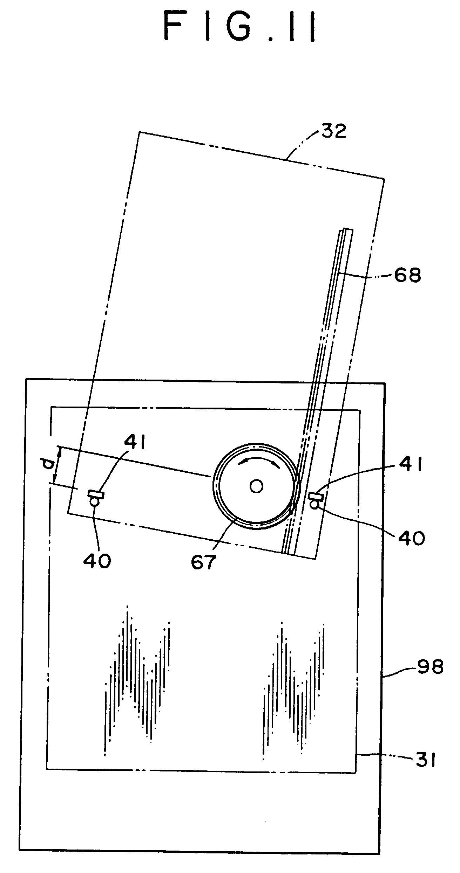

When the tray 32 is advanced to the predetermined position, the right side pin 40 of the tray 32 is contacted with the corresponding projection 41 of the main chassis 31 as shown in Fig. 11. Consequently, a right side portion of the tray 32 in Fig. 11 cannot be advanced any more from the main body 98.

In the meantime, the drive gear 67 is still driven so that the tray 32 may be advanced further from the main body 98. As a result, only a left side portion of the tray 32 in Fig. 11 is advanced forwardly (upwardly in Fig. 11) from the main body 98 as shown in Fig. 11. Then, the left side pin 40 in Fig. 11, which is disposed rearwardly by a distance d from the right side pin 40, is soon contacted with the corresponding projection 41. Consequently, the tray 32 cannot be advanced any more. Thereupon, the rotation of the drive gear 67 is stopped. As a result, the tray 32 is stopped at the position at which it is pivoted a little to that side (right side in Fig. 11) on which the rack 68 is formed as shown in Fig. 11. While Fig. 11 indicates the inclined condition of the tray 32 in an exaggerated manner for convenience of illustration, actually the inclination is comparatively small, and a user will recognize that the tray 32 and the main body 98 extend substantially in parallel to each other.

When the tray 32 is at the position described just above, if a disk is placed onto the recessed portion 38 of the tray 32 and an instruction of loading is issued, then the loading motor 61 is energized to rotate in the direction opposite to that described above. Consequently, the drive gear 67 is rotated in the clockwise direction in Fig. 11. In this instance, since the rack 68 is provided on only one side of the tray 32 as described hereinabove, the force of the drive gear 67 acts only upon the rack 68 side of the tray 32, and consequently, a moment acts upon the tray 32 so that it pivots the tray 32 in the clockwise direction in Fig. 11. However, as described hereinabove, the tray 32 is already at its stopped position wherein it is pivoted a little in the clockwise direction. As a result, the tray 32 cannot be pivoted any more in the clockwise direction. Accordingly, the tray 32 is retracted smoothly toward the main body 98 side without a play.

It is to be noted that, while, in Fig. 11, the pin 40 and the projection 41 are formed also on the right sides of the tray 32 and the main chassis 31, respectively, for convenience of description, such stoppers provided by the right side pin 40 and the right side projection 41 are not formed actually in the disk loading apparatus of the present embodiment. Instead, upon unloading, the engagement between the pin 71b of the pivotal plate 71 and an end portion 67e of the cam 67c takes place at a timing a little earlier than the engagement between the pin 40 and the projection 41 as seen from Fig. 7. In particular, upon unloading, after the pin 71b and the end portion 67e are engaged with each other to stop rotation of the drive gear 67, the tray 32 tends to further advance by its own inertia. As a result, the right side of the tray 32 is stopped at the position at which the pin 71b and the end portion 67e are engaged with each other, but the left side is further advanced and is then stopped at a position at which the pin 40 and the projection 41 are engaged with each other.

If the drive gear 67 rotates in the clockwise direction to retract the tray 32 toward the main body 98 side, when the tray 32 is moved to a predetermined position, the pin 71b of the pivotal plate 71 is lifted by the inclined face 67d of the cam 67c as seen from Fig. 7. As a result, the pivotal plate 71 is pivoted in the counterclockwise direction in Fig. 9 around the common axis of the projections 71a. Consequently, also the turntable chassis 51 is lifted upwardly in Fig. 9. Then, when the pin 71b reaches an upper side groove (Fig. 7) of the cam 67c, the pivotal plate 71 and the turntable chassis 51 come their individual horizontal positions (Fig. 10). In this instance, the turntable 53 is fitted into the center hole of the disk. Then, the chucking pulley 34b presses the disk against the turntable 53. Accordingly, the turntable 53 can thereafter be rotated to reproduce information from the disk.

In the meantime, while the disk player is normally used in a horizontally placed condition, it sometimes occurs that an instruction of unloading is issued in error while the disk player is placed vertically. In particular, an instruction of unloading may be issued while the disk player is in a position pivoted by 90 degrees in the clockwise direction from the position shown in Fig. 10. In this instance, since the turntable chassis 51 and the pivotal plate 71 are pivoted in their sinking direction as described hereinabove, the disk placed on the turntable 53 may drop downwardly (rightwardly in Fig. 10). Here, since the arresting portions 36 are formed on the tray 32, the disk is arrested by the arresting portions 36 and is prevented from dropping to the interior of the body 98 any more. Further, in order to make the arresting engagement by the arresting portions 36 surer, a projected portion 33b is formed on the chucking plate 34 and extends to a position in the proximity of the arresting portion 36. As a result, when the disk drops, it is prevented from being inclined to such a degree that it jumps over the arresting portions 36. As a result, the disk 99 is arrested by the arresting portions 36 with certainty.

The position of the arresting portions 36 is set so that, when the tray 32 thereafter comes to a predetermined position advanced from the main body 98, the disk 99 arrested by the arresting portions 36 is exposed sufficiently from the main body 98 as seen from Fig. 12. Accordingly, the user can take out the disk 99 arrested by the arresting portions 36 with certainty. When the disk 99 is in position, naturally the disk 99 can be removed readily from the tray 32.

Having now fully described the invention, it will be apparent to one of ordinary skill in the art that many changes and modifications can be made thereto without departing from the scope of the invention as set forth herein.

## Claims

1. A disk loading apparatus, comprising:
a main body (98):
a tray (32) mounted on said main body (98) for advancing and retracting movement from and into said main body (98) and having a disk receiving portion (38) for removably receiving a disk (99) thereon:
a motor (61) disposed in said main body (98) and including a rotary shaft having an axis of rotation extending in parallel to the direction of advancing and retracting movement of said tray (32): and
a first pulley (62) mounted on said rotary shaft of said motor (61), a second pulley (63) disposed in said main body (98) and including a rotary shaft (80) having an axis extending perpendicularly to the direction of said axis of said rotary shaft of said motor (61), said second pulley (63) being held in contact with said first pulley (62) so that rotation of said first pulley (62) is transmitted to said second pulley (63), and gear means (64, 65, 66, 67, 68) for transmitting rotation of said second pulley (63) to said tray (32),
bias means (81, 82, 83) for biasing said second pulley (63) into contact with said first pulley (62).

2. A disk loading apparatus according to claim 1, further comprising guide means (31a) for supporting said tray (32) for sliding movement with respect to said main body (98).

3. A disk loading apparatus according to claim 1 or 2, wherein at least one of said first (62) and second (63) pulleys is an elastic member.

4. A disk loading apparatus according to claim 3, wherein at least a contacting portion of at least one of said first (62) and second (63) pulleys at which the one pulley contacts with the other pulley is formed from the elastic member.

## Patentansprüche

1. Plattenladevorrichtung, aufweisend:
einen Hauptkörper (98);
einen auf dem Hauptkörper (98) befestigten Schlitten (32) für eine ausfahrende und zurückziehende Bewegung aus dem und in den Hauptkörper (98) und aufweisend einen Plattenaufnahmeabschnitt (38) zur entfernbaren Aufnahme einer Platte (99) darauf;
einen in dem Hauptkörper (98) angeordneten Motor (61) und enthaltend eine drehbare Welle mit einer sich parallel zur Richtung der ausfahrenden und zurückziehenden Bewegung des Schlittens (32) erstreckenden Drehachse; und
ein auf der drehbaren Welle des Motors (61) befestigtes erstes Antriebsrad (62), ein in dem Hauptkörper (98) angeordnetes und eine drehbare Welle (80) mit einer sich senkrecht zu der Richtung der Achse der drehbaren Welle des Motors (61) erstreckenden Achse enthaltendes zweites Antriebsrad (63), wobei das zweite Antriebsrad (63) in Kontakt mit dem ersten Antriebsrad (62) gehalten wird, so daß die Drehung des ersten Antriebsrades (62) auf das zweite Antriebsrad (63) übertragen wird, und eine Getriebeeinrichtung (64, 65, 66, 67, 68) zur Übertragung der Drehung des zweiten Antriebsrades (63) auf den Schlitten (32),
eine Vorspanneinrichtung (81, 82, 83) zur Vorspannung des zweiten Antriebsrades (63) in Kontakt mit dem ersten Antriebsrad (62).

2. Plattenladevorrichtung gemäß Anspruch 1,
ferner aufweisend eine Führungseinrichtung (31a) zur Unterstützung des Schlittens (32) für eine gleitende Bewegung bezüglich des Hauptkörpers (98).

3. Plattenladevorrichtung gemäß Anspruch 1 oder 2,
wobei wenigstens eines von erstem (62) und zweitem (63) Antriebsrad ein elastisches Teil ist.

4. Plattenladevorrichtung gemäß Anspruch 3,
wobei wenigstens ein Kontaktabschnitt von wenigstens einem von erstem (62) und zweitem (63) Antriebsrad, mit dem das eine Antriebsrad das andere Antriebsrad berührt, aus dem elastischen Teil gebildet ist.

## Revendications

1. Appareil de chargement de disques, comprenant :
un corps principal (98);
un plateau (32) monté sur ledit corps principal (98) pour un mouvement d'avance et de recul depuis ledit corps principal (98) et jusque dans celui-ci, et ayant une partie de réception de disque (38) pour recevoir sur celle-ci un disque (99) de manière amovible ;
un moteur (61) disposé dans ledit corps principal (98) et incluant un arbre rotatif ayant un axe de rotation qui s'étend en parallèle à la direction du mouvement d'avance et de recul dudit plateau (32) ; et
une première poulie (62) montée sur ledit arbre rotatif dudit moteur (61), une seconde poulie (63) disposée dans ledit corps principal (98) et incluant un arbre rotatif (80) ayant un axe qui s'étend perpendiculairement à la direction de l'axe dudit arbre rotatif dudit moteur (61), ladite seconde poulie (63) étant maintenue en contact avec ladite première poulie (62) de sorte que la rotation de ladite première poulie (62) est transmise à ladite seconde poulie (63), et des moyens à engrenages (64, 65, 66, 67, 68) pour transmettre la rotation de ladite seconde poulie (63) audit plateau (32), et
des moyens de sollicitation (81, 82, 83) pour solliciter ladite seconde poulie (63) jusqu'en contact avec ladite première poulie (62).

2. Appareil de chargement de disques selon la revendication 1, comprenant en outre des moyens de guidage (3 la) pour supporter ledit plateau (32) pour un mouvement de coulissement par rapport audit corps principal (98).

3. Appareil de chargement de disques selon l'une ou l'autre des revendications 1 et 2, dans lequel l'une au moins parmi ladite première poulie (62) et ladite seconde poulie (63) est un élément élastique.

4. Appareil de chargement de disques selon la revendication 3, dans lequel au moins une partie de contact de l'une au moins parmi ladite première poulie (62) et ladite seconde poulie (63) au niveau de laquelle ladite poulie vient au contact avec l'autre poulie, est formée par l'élément élastique.
